# EUROPEAN PATENT SPECIFICATION

(11) **EP 1 695 588 B1**
(45) Date of publication and mention of the grant of the patent: **17.05.2017**
(21) Application number: 04817198.7
(22) Date of filing: 14.10.2004
(51) Int. Cl.: H04W 16/00

(54) **METHOD OF COMMUNICATION IN A WIRELESS COMMUNICATION NETWORK, CORRESPONDING STATION AND NETWORK**
VERFAHREN ZUR KOMMUNIKATION IN EINEM DRAHTLOSEN KOMMUNIKATIONSNETZ, ENTSPRECHENDE STATION UND NETZWERK
PROCÉDÉ DE COMMUNICATION DANS UN RESEAU DE COMMUNICATION SANS FIL, STATION ET RESEAU CORRESPONDANTS

(30) Priority: 20.10.2003 FR 0312251
(43) Date of publication of application: 30.08.2006
(73) Proprietor: Thomson Licensing, 92130 Issy-les-Moulineaux (FR)
(72) Inventor: FONTAINE, Patrick, F-35200 Rennes (FR); LOPEZ, Patrick, F-35450 Livre sur Changeon (FR); GUILLOUARD, Samuel, F-35135 Chantepie (FR)
(74) Representative: Novagraaf Technologies
(86) International application number: PCT/EP2004/011618
(87) International publication number: WO 2005/039225

(56) References cited:
- EP-A- 0 952 747
- WO-A-95/09490
- JP-A- 2001 268 632
- US-A- 5 212 930

## Description

### 1. Field of the invention

The invention relates to a method of communication in respect of transmitting/receiving stations (1, 2) in a wireless communication network, in which method first multi-receiver frames are exchanged between a station and a plurality of other stations and second mono-receiver frames are exchanged between a transmitting station and a receiving station, the first frames being transmitted in an omnidirectional manner.

The invention is intended more particularly for a company or domestic wireless communication network using, for example, the IEEE802.11a/g American standard or the Hiperlan/2 European standard of the ETSI (European Telecommunications Standards Institute).

### 2. State of the art

The performance of wireless communication is limited, chiefly in an enclosed space, by the attenuation of the power of the signal with distance, noise, interference with other electrical equipment, and also by the multipath effect due to the reflection of the waves off obstacles such as walls. These performance problems are set forth in the article "System Applications for Wireless Indoor Communications" by A.S. Acampora published in August 1987 in "IEEE communications magazine - volume 25; No. 8"

In the IEEE802.11a/g standard, the communications between the fixed or mobile stations of the network, more particularly computers and access points (or nodes of the network), are effected by transfer of:
- control frames, of small sizes, such as the so-called "RTS" and "CTS" frames, standing respectively for "Request To Send" and "Clear To Send", used to control access to the medium, and "ACK" standing for "Acknowledgement" for validating the reception of data,
- data frames, so-called "DATA" frames, used for the transmission of the data and possibly containing a great deal of information,
- and management frames used for exchanging network management information which are transmitted in the same fashion as the data frames.

The mechanism of basic access between the stations, called "DCF" ("Distributed Coordination Function") follows the "CSMA/CA" protocol ("Carrier Sense Multiple Access with Collision Avoidance") described hereinbelow, so as to avoid collisions between frames:
- A first station wishing to dispatch data to a second station sends an RTS frame to all the stations located in its transmission field to reserve their communication medium for a certain duration while indicating the source, the destination and the duration of the transaction.
- The second station responds, if the medium is free, to all the stations in its transmission field to signal its acceptance of the transfer of data with a CTS frame, containing the same information as the RTS frame.
- All the stations, other than the two stations that are communicating, having received at least one of the RTS or CTS frames set up, on the basis of the information received, a "NAV" ("Network Allocation Vector"), that is to say a period during which they stop all activity so as not to disturb the transfer of data.
- After receipt of the CTS frame, the first station dispatches the data to be transferred to the second station in one or more DATA frames.
- The second station receives the data and dispatches an ACK frame to the first station to signal the correct receipt of the data.

The RTS and CTS frames are multi-receiver frames that have to be received by all the stations of the network that are liable to communicate with the two stations, while the DATA and ACK frames are mono-receiver frames that have only to be received by the two stations that are communicating.

Currently, in a wireless communication network, each station of the network makes use of omnidirectional antennas for dispatching all the types of frames indicated above. The extent of the coverage, the robustness of the network and the throughput of data transfer depends on the mode of transmission utilized by the physical layer of the antenna. These physical modes are defined by their modulation type and their FEC (stands for "Forward Error Correction") rate. For the IEEE802.11a/g standards and the Hiperlan/2 standard, these modes are defined by tables 1 and 2 with their throughput. In each table, the modes are classified from the more robust mode (lower throughput) to the less robust mode (higher throughput). At a given modulation type (e.g BPSK), the modes are classified from the lower FEC rate (e.g. BPSK 1/2) to the higher FEC rate (e.g. BPSK 3/4).

**Table 1 - HiperLan/2**

| Mode | Throughput (Mb/s) |
|---|---|
| BPSK 1/2 | 6 |
| BPSK 3/4 | 9 |
| QPSK 1/2 | 12 |
| QPSK 3/4 | 18 |
| 16QAM 9/16 | 27 |
| 16QAM 3/4 | 36 |
| 64QAM 3/4 | 54 |

**Table 2 - IEEE802.11a/g**

| Mode | Throughput (Mb/s) |
|---|---|
| BPSK 1/2 | 6 |
| BPSK 3/4 | 9 |
| QPSK 1/2 | 12 |
| QPSK 3/4 | 18 |
| 16QAM 1/2 | 24 |
| 16QAM 3/4 | 36 |
| 64QAM 2/3 | 48 |
| 64QAM 3/4 | 54 |

These standards use a OFDM modulation, thus the modes given above correspond to the modulation of the sub-carriers.

The more extensive the coverage, the greater the number of robust communications that are set up, and the lower the throughput. When a communication is made in robust mode, for example BPSK1/2, the coverage is extensive, but the throughput is low, while when a communication is made in higher mode, for example 64QAM3/4, the throughput is greater but the coverage is restricted (see IEEE 802.11a/g standard for other modes of transmission). Consequently a wireless communication network with stations equipped with omnidirectional antennas exhibits limited coverage and a relatively low communication throughput. Furthermore the communications are subject to multipath effects which degrade the operation of the network. Moreover, certain systems are known which use antenna diversity in reception to improve performance.

D0 (JP2001 268632) discloses a radio communication system, radio base station, and mobile station which are constituted by a narrow-band modulation and demodulation system for a control channel sent and received with omni-directivity antenna. A control channel performs transmission and reception with the omni directivity, and a message channel transmits and receives by turning directivity to a specific mobile station. A 256QAM strange demodulation method is used for a message channel, and a 16QAM strange demodulation method is used for a control channel.

D1 (WO 95/09490 A) discloses that the base station transmits signals to the mobile station in a wide antenna lobe. After the position of the mobile station is determined, transmission is done with a narrow antenna lobe.

### 3. Invention summary

The aim of the invention is to improve the communications in a wireless communication network, such as indicated hereinabove, by increasing the throughput of the network in a general manner.
More particularly, the invention is a method of communication in respect of transmitting/receiving stations in a wireless communication network, in which method first multi-receiver frames are exchanged between a station and a plurality of other stations and second mono-receiver frames are exchanged between a transmitting station and a receiving station. The first frames are transmitted in an omnidirectional manner. The second frames are transmitted in a directional manner. With the method of communication according to the invention, the omnidirectional transmission (both when sending and receiving) is effected in a more robust fashion than the directional transmission.

According to a further feature of the method according to the invention, the most robust transmission is effected at a lower throughput than the least robust transmission. With the method of communication according to the invention, each station of the network is equipped with an omnidirectional antenna for the transmission of the RTS and CTS frames in particular and with one or more directional antennas for the transmission of the DATA and ACK frames. This arrangement affords an increase in the throughput and in the quality of the communication between the stations and in particular by boosting the throughput of the mono-receiver messages.

With the method of communication according to the invention, the mono-receiver frames are modulated by a modulation with a first number of phases, the multi-receiver frames are modulated by a modulation with a second number of phases, and the first number of phases is higher than the second number of phases.

Preferably, the mono-receiver frames are modulated by a modulation with more than two phases and the multi-receiver frames are modulated by a two phases modulation.

According to a further feature of the method according to the invention, the mono-receiver frames are coded with a first forward error correction rate, the multi-receiver frames are coded with a second forward error correction, and the first rate is higher than the second rate.

According to a particular embodiment of the invention, the mono-receiver frames and the multi-receiver frames are modulated by the same modulation.

In accordance with another aspect of the invention, the transmission is in compliance with one of the standard belonging to the set comprising:
- Hiperlan type 2; and
- IEEE 802.11a

The transmission can be further in compliance with IEEE 802.11g.

The invention extends to a transmitting and/or receiving station for a wireless communication network. The station is devised to transmit and/or receive multi-receiver frames in an omnidirectional manner and to transmit and/or receive mono-receiver frames in a directional manner. More precisely, the station comprises means to transmit and/or receive multi-receiver frames in an omnidirectional manner and means to transmit and/or receive mono-receiver frames in a directional manner, the transmission in a omnidirectional manner being effected in a more robust fashion than the transmission in a directional manner.

According to one embodiment of the invention, the station is adapted to transmit and/or receive mono-receiver frames which are modulated by a modulation with a first number of phases and multi-receiver frames which are modulated by a modulation with a second number of phases, the first number of phases being higher than the second number of phases.

According to a particular embodiment of the invention, the station is adapted to transmit and/or receive mono-receiver frames which are modulated by a modulation with more than two phases and multi-receiver frames which are modulated by a two phases modulation.

According to one embodiment of the invention, the station is adapted to transmit and/or receive mono-receiver frames which are coded with a first forward error correction rate and multi-receiver frames which are coded with a second forward error correction, the first rate being higher than the second rate.

According to a particular embodiment of the invention, the station is adapted to transmit and/or receive mono-receiver frames and multi-receiver frames which are modulated by the same modulation.

The transmitting/receiving station according to the invention comprises at least one omnidirectional antenna and one or more directional antennas, for example four directional antennas oriented at 90° with respect to one another.

In accordance with another aspect of the invention, the stations are adapted to transmit in compliance with one of the standard belonging to the set comprising:
- Hiperlan type 2; and
- IEEE 802.11a

The stations are further adapted to transmit in compliance with IEEE 802.11g.

The invention extends further to a wireless communication network comprising one or more such transmitting/receiving stations.

### 4. List of Figures

The method and the station according to the invention are described in greater detail hereinbelow and illustrated by the drawings.
Figure 1 is a schematic illustrating the method of communication in a wireless communication network according to the invention.
Figure 2 illustrates very diagrammatically a network using the method according to the invention.
Figure 3 shows very diagrammatically a station equipped with four directional antennas and with an omnidirectional antenna according to the invention.

### 5. Detailed description of the invention

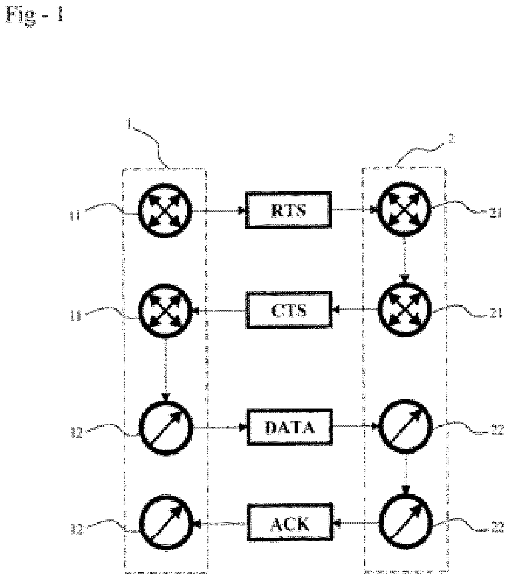

Illustrated in Figure 1 by a very diagrammatic schematic is the method of wireless communication according to the invention for the transfer of data at high throughput between two stations 1, 2. The station 1 dispatches a first multi-receiver frame RTS in an omnidirectional manner (omnidirectional antenna 11). The station 2 in response to the receipt of the RTS frame (on its omnidirectional antenna 21) dispatches a multi-receiver frame CTS. In response to the receipt of the CTS frame (on its omnidirectional antenna 11) the station 1 dispatches a mono-receiver frame DATA (by way of a directional antenna 12). In response to the receipt of the DATA frame (on a directional antenna 22), the station 2 returns a mono-receiver frame ACK (antenna 22) which is received by the station 1 on the antenna 12.

It is therefore understood that with the method according to the invention the multi-receiver frames such as RTS and CTS are dispatched by the stations of the network with the help of omnidirectional antennas whereas the mono-receiver frames such as DATA and ACK are dispatched and received by the stations with the help of directional antennas.

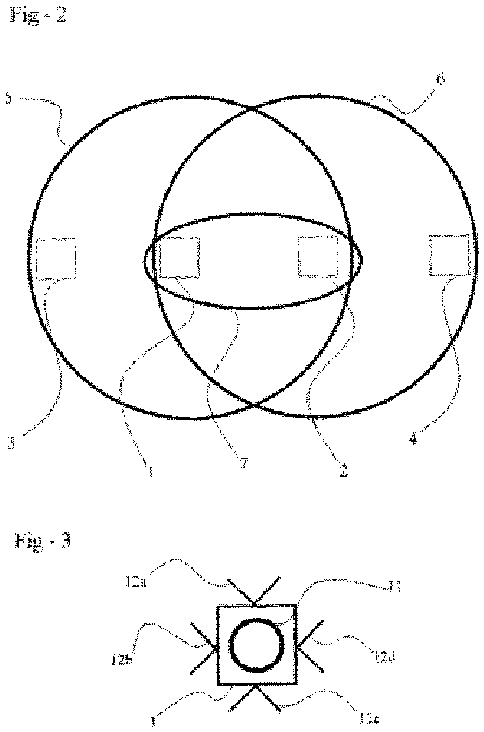

Depicted in Figure 2 is the topology of a wireless communication network according to the invention with four stations 1, 2, 3, 4. Of course, a wireless communication network according to the invention can comprise a larger number of stations. This figure depicts the coverage represented by the circle 5 which corresponds to the use of the omnidirectional antenna of the station 1 (and of a receiving station using an omnidirectional antenna) when the station 1 dispatches the multi-receiver frame RTS. Also depicted is the coverage represented by the circle 6 which corresponds to the use of the omnidirectional antenna of the station 2 (and of a receiving station using an omnidirectional antenna) when the station 2 dispatches the multi-receiver frame CTS. Depicted, finally, is the coverage represented by the ellipse 7 when the stations 1 and 2 use their directional antennas for the transmission of the mono-receiver frames DATA and ACK.

The stations 1 to 4 may be fixed or mobile computers, access points of the network or audio and video apparatuses.

In the communication between the stations 1 and 2, the station 3 receives the RTS frame which contains the information on the duration of the communication between the stations 1 and 2. Moreover, the station 4 receives the CTS frame which also contains the information on the duration of the communication between the stations 1 and 2 by dint of the network topology illustrated in Figure 2. As a consequence the stations 3 and 4 can set up an NAV in such a way as to remain inactive at least during the communication with the directional antennas between the stations 1 and 2.

Of course, the stations 1 and 2 must use known algorithms for determining the best directional antenna both in reception and in transmission.

In particular the choice of the best directional antenna in transmission and reception may be based on the analysis of test frames exchanged between the two stations and of measurement of the power of the signal received with updating of a table in each station where a directional antenna of a station is matched up in correspondence with a directional antenna of the other station, the directional antennas of the two stations being usable both for transmission and for reception.

The use of omnidirectional antennas according to a low throughput mode of transmission for dispatching multi-receiver frames, of small sizes and hence not needing to be sent with a high throughput, allows very good coverage of the network, thus limiting to the maximum the interference and the collisions between the frames and allowing other neighbouring networks to detect activity, these latter thus being able to switch to another channel to make their communications.

Moreover, the use of directional transmitting/receiving antennas according to a high throughput mode for the transfer of the mono-receiver frames, which are frames of large size, makes it possible to increase the communication throughput in the network. Furthermore, by virtue of their directivity, the directional antennas improve the signal-to-noise and signal-to-interference ratios and hence improve the antenna gain on transmission and on reception, resulting in an overall improvement to the communication in the network.

Represented very diagrammatically in Figure 3 is a station such as the station 1 comprising an omnidirectional antenna such as 11 represented symbolically by a circle and four directional antennas 12a, 12b, 12c, 12d which are disposed in one and the same plane but oriented at 90° with respect to one another.

The omnidirectional antenna 11 can be arranged so as to send and/or receive multi-receiver frames in the robust mode of transmission (for example, multi-receiver frames are modulated by a two phases modulation, e.g. BPSK1/2) and each directional antenna 12a to 12d may be arranged so as to send or receive mono-receiver frames in a higher mode (for example, mono-receiver frames are modulated by a modulation with more than two phases, e.g. QPSK, 8PSK, 16 ou 64QAM3/4). It should be understood that the most robust transmission is effected at a lower throughput than the least robust transmission. More generally, the most robust transmission is based on a physical mode of lower throughput. For example, the multi-receiver frames are modulated by a physical mode, e.g. BPSK 1/2 (resp. QPSK 1/2), and mono-receiver frames are modulated by a physical mode of higher throughput, e.g. QPSK 1/2 (resp. QPSK3/4, or 16QAM 3/4, or 64QAM2/3, or 64QAM 3/4).

Thus according to another embodiment of the invention, the multi-receiver frames are modulated by a four phases modulation, e.g. QPSK 1/2 (resp. QPSK 3/4), and mono-receiver frames are modulated by a more than four phases modulation, e.g. 16QAM 1/2 (resp. 16QAM 3/4, or 64QAM2/3, or 64QAM 3/4).

According to another embodiment of the invention, the multi-receiver frames are modulated by a four phases modulation with a lower FEC rate rate, e.g. QPSK 1/2 (resp.16QAM 1/2), and mono-receiver frames are modulated by a four phases modulation with a higher FEC rate, e.g. QPSK 3/4 (resp.16QAM 3/4).

Of course a station according to the invention can comprise more or fewer than four directional antennas. A station configured to implement the method of communication according to the invention remains of course compatible in respect of a communication with stations that do not apply the principle of communication according to the invention.

The invention can be applied to standards other than the IEEE802.11a/g or Hiperlan/2 standards provided that the communications are effected by means of multi-receiver frames and of mono-receiver frames.

## Claims

1. Method of communication in respect of transmitting/receiving stations (1, 2) in a wireless communication network, in which method first multi-receiver frames (RTS, CTS) are exchanged between a station and a plurality of other stations and second mono-receiver frames (DATA, ACK) are exchanged between a transmitting station and a receiving station, the first multi-receiver frames (RTS, CTS) being transmitted in an omnidirectional manner and the second mono-receiver frames (DATA, ACK) being transmitted in a directional manner, **characterized in that** the mono-receiver frames are modulated by a modulation with a first number of phases and the multi-receiver frames are modulated by a modulation with a second number of phases, said first number of phases being higher than the second number of phases, and **in that** the mono-receiver frames are coded with a first forward error correction rate and the multi-receiver frames are coded with a second forward error correction, said first rate being higher than the second rate .

2. Method according to claim 1, **characterized in that** the most robust transmission is effected at a lower throughput than the least robust transmission.

3. Method according to claim 1, **characterized in that** the mono-receiver frames are modulated by a modulation with more than two phases and **in that** the multi-receiver frames are modulated by a two phases modulation.

4. Method according to claim 1, **characterized in that** the mono-receiver frames and the multi-receiver frames are modulated by the same modulation.

5. Method according to any of claims 1 to 4, **characterized in that** the transmission is in compliance with one of the standard belonging to the set comprising:
- Hiperlan type 2; and
- IEEE 802.11a.

6. Method according to any of claims 1 to 4, **characterized in that** the transmission is in compliance with IEEE 802.11g.

7. Transmitting and/or receiving station (1, 2, 3, 4) for a wireless communication network, said station comprises means to transmit and/or receive multi-receiver frames in an omnidirectional manner and means to transmit and/or receive mono-receiver frames in a directional manner, **characterized in that** the mono-receiver frames are modulated by a modulation with a first number of phases and the multi-receiver frames are modulated by a modulation with a second number of phases, said first number of phases being higher than the second number of phases and **in that** the mono-receiver frames are coded with a first forward error correction rate and the multi-receiver frames are coded with a second forward error correction, said first rate being higher than the second rate .

8. Station according to claim 7, **characterized in that** the mono-receiver frames are modulated by a modulation with more than two phases and **in that** the multi-receiver frames are modulated by a two phases modulation.

9. Station according to claim 7, **characterized in that** the mon-receiver frames and the multi-receiver frames are modulated by the same modulation.

10. Station according to any of claims 7 to 9, **characterized in that** it comprises at least one omnidirectional antenna (11) and one or more directional antennas (12a, 12b, 12c, 12d).

11. Station according to any of claims 7 to 10, **characterized in that** it comprises four directional antennas oriented at 90° with respect to one another.

12. Station according to any of claims 7 to 11, **characterized in that** the transmission is in compliance with one of the standard belonging to the set comprising:
- Hiperlan type 2; and
- IEEE 802.11a.

13. Station according to any of claims 7 to 11, **characterized in that** the transmission is in compliance with IEEE 802.11g.

14. Wireless communication network **characterized in that** it comprises several transmitting and/or receiving stations (1, 2, 3, 4) according to one of claims 7 to 13.

## Patentansprüche

1. Verfahren zur Kommunikation in Bezug auf Sende-/Empfangsstationen (1, 2) in einem drahtlosen Kommunikationsnetz, wobei in dem Verfahren zwischen einer Station und mehreren anderen Stationen erste, Mehrempfängerrahmen (RTS, CTS) ausgetauscht werden und wobei zwischen einer Sendestation und einer Empfangsstation zweite, Einempfängerrahmen (DATA, ACK) ausgetauscht werden, wobei die ersten, Mehrempfängerrahmen (RTS, CTS) auf ungerichtete Weise gesendet werden und die zweiten, Einempfängerrahmen (DATA, ACK) auf gerichtete Weise gesendet werden, **dadurch gekennzeichnet, dass** die Einempfängerrahmen durch eine Modulation mit einer ersten Anzahl von Phasen moduliert werden und die Mehrempfängerrahmen durch eine Modulation mit einer zweiten Anzahl von Phasen moduliert werden, wobei die erste Anzahl von Phasen höher als die zweite Anzahl von Phasen ist, und dadurch, dass die Einempfängerrahmen mit einer ersten Vorwärtsfehlerkorrekturrate codiert werden und dass die Mehrempfängerrahmen mit einer zweiten Vorwärtsfehlerkorrekturrate codiert werden, wobei die erste Rate höher als die zweite Rate ist.

2. Verfahren nach Anspruch 1, **dadurch gekennzeichnet, dass** die robusteste Sendung bei einem niedrigeren Durchsatz als die am wenigsten robuste Sendung bewirkt wird.

3. Verfahren nach Anspruch 1, **dadurch gekennzeichnet, dass** die Einempfängerrahmen durch eine Modulation mit mehr als zwei Phasen moduliert werden und dass die Mehrempfängerrahmen durch eine Zweiphasenmodulation moduliert werden.

4. Verfahren nach Anspruch 1, **dadurch gekennzeichnet, dass** die Einempfängerrahmen und die Mehrempfängerrahmen durch dieselbe Modulation moduliert werden.

5. Verfahren nach einem der Ansprüche 1 bis 4, **dadurch gekennzeichnet, dass** die Sendung konform zu einem der Standards ist, die zu der Menge gehören, die umfasst:
- Hiperlan Typ 2; und
- IEEE 802.11a.

6. Verfahren nach einem der Ansprüche 1 bis 4, **dadurch gekennzeichnet, dass** die Sendung konform zu IEEE 802.11g ist.

7. Sende- und/oder Empfangsstation (1, 2, 3, 4) für ein drahtloses Kommunikationsnetz, wobei die Station Mittel, um Mehrempfängerrahmen auf ungerichtete Weise zu senden und/oder zu empfangen, und Mittel, um Einempfängerrahmen auf gerichtete Weise zu senden und/oder zu empfangen, umfasst, **dadurch gekennzeichnet, dass** die Einempfängerrahmen durch eine Modulation mit einer ersten Anzahl von Phasen moduliert werden und dass die Mehrempfängerrahmen durch eine Modulation mit einer zweiten Anzahl von Phasen moduliert werden, wobei die erste Anzahl von Phasen höher als die zweite Anzahl von Phasen ist, und dadurch, dass die Einempfängerrahmen mit einer ersten Vorwärtsfehlerkorrekturrate codiert werden und dass die Mehrempfängerrahmen mit einer zweiten Vorwärtsfehlerkorrekturrate codiert werden, wobei die erste Rate höher als die zweite Rate ist.

8. Station nach Anspruch 7, **dadurch gekennzeichnet, dass** die Einempfängerrahmen durch eine Modulation mit mehr als zwei Phasen moduliert werden und dass die Mehrempfängerrahmen durch eine Zweiphasenmodulation moduliert werden.

9. Station nach Anspruch 7, **dadurch gekennzeichnet, dass** die Einempfängerrahmen und die Mehrempfängerrahmen durch dieselbe Modulation moduliert werden.

10. Station nach einem der Ansprüche 7 bis 9, **dadurch gekennzeichnet, dass** sie mindestens eine ungerichtete Antenne (11) und eine oder mehrere Richtantennen (12a, 12b, 12c, 12d) umfasst.

11. Station nach einem der Ansprüche 7 bis 10, **dadurch gekennzeichnet, dass** sie vier Richtantennen umfasst, die unter 90° in Bezug zueinander orientiert sind.

12. Station nach einem der Ansprüche 7 bis 11, **dadurch gekennzeichnet, dass** die Sendung konform zu einem der Standards ist, die zu der Menge gehören, die umfasst:
- Hiperlan Typ 2; und
- IEEE 802.11a.

13. Station nach einem der Ansprüche 7 bis 11, **dadurch gekennzeichnet, dass** die Sendung konform zu IEEE 802.11g ist.

14. Drahtloses Kommunikationsnetz, **dadurch gekennzeichnet, dass** es mehrere Sende- und/oder Empfangsstationen (1, 2, 3, 4) nach einem der Ansprüche 7 bis 13 umfasst.

## Revendications

1. Procédé de communication relatives à des stations d'émission/de réception (1, 2) dans un réseau de communication sans fil, dans lequel des premières trames multi-réception (RTS, CTS) sont échangées entre une station et une pluralité d'autres stations et des deuxièmes trames de réception unique (DATA, ACK) sont échangées entre une station d'émission et une station de réception, les premières trames multi-réception (RTS, CTS) étant transmises de manière omnidirectionnelle et les deuxièmes trames de réception unique (DATA, ACK) étant transmises de manière directionnelle, **caractérisé en ce que** les trames de réception unique sont modulées par une modulation avec un premier nombre de phases et les trames multi-réception sont modulées par une modulation avec un deuxième nombre de phases, ledit premier nombre de phases étant supérieur au deuxième nombre de phases, et **en ce que** les trames de réception unique sont codées avec un premier taux de correction aval d'erreur et les trames multi-réception sont codées avec un deuxième taux de correction aval d'erreur, ledit premier taux étant supérieur au deuxième taux.

2. Procédé selon la revendication 1, **caractérisé en ce que** la transmission la plus robuste est effectuée à un débit inférieur à celui de la transmission la moins robuste.

3. Procédé selon la revendication 1, **caractérisé en ce que** les trames de réception unique sont modulées par une modulation avec plus de deux phases et **en ce que** les trames multi-réception sont modulées par une modulation à deux phases.

4. Procédé selon la revendication 1, **caractérisé en ce que** les trames de réception unique et les trames multi-réception sont modulées par la même modulation.

5. Procédé selon l'une quelconque des revendications 1 à 4, **caractérisé en ce que** la transmission est conforme à l'une des normes appartenant à l'ensemble comprenant :
- Hiperlan type 2 ; et
- IEEE 802.11a.

6. Procédé selon l'une quelconque des revendications 1 à 4, **caractérisé en ce que** la transmission est conforme à la norme IEEE 802.11g.

7. Station d'émission et/ou de réception (1, 2, 3, 4) pour un réseau de communication sans fil, ladite station comprenant un moyen permettant de transmettre et/ou de recevoir des trames multi-réception de manière omnidirectionnelle et un moyen permettant de transmettre et/ou de recevoir des trames de réception unique de manière directionnelle, **caractérisée en ce que** les trames de réception unique sont modulées par une modulation avec un premier nombre de phases et les trames multi-réception sont modulées par une modulation avec un deuxième nombre de phases, ledit premier nombre de phases étant supérieur au deuxième nombre de phases, et **en ce que** les trames de réception unique sont codées avec un premier taux de correction aval d'erreurs et les trames multi-réception sont codées avec un deuxième taux de correction aval d'erreur, ledit premier taux étant supérieur au deuxième taux.

8. Station selon la revendication 7, **caractérisée en ce que** les trames de réception unique sont modulées par une modulation avec plus de deux phases et **en ce que** les trames multi-réception sont modulées par une modulation à deux phases.

9. Station selon la revendication 7, **caractérisée en ce que** les trames de réception unique et les trames multi-réception sont modulées par la même modulation.

10. Station selon l'une quelconque des revendications 7 à 9, **caractérisée en ce qu'**elle comprend au moins une antenne omnidirectionnelle (11) et une ou plusieurs antennes directionnelles (12a, 12b, 12c, 12d).

11. Station selon l'une quelconque des revendications 7 à 10, **caractérisée en ce qu'**elle comprend quatre antennes directionnelles orientées à 90° les unes par rapport aux autres.

12. Station selon l'une quelconque des revendications 7 à 11, **caractérisée en ce que** la transmission est conforme à l'une des normes appartenant à l'ensemble comprenant :
- Hiperlan type 2 ; et
- IEEE 802.11a.

13. Station selon l'une quelconque des revendications 7 à 11, **caractérisée en ce que** la transmission est conforme à la norme IEEE 802.11g.

14. Réseau de communication sans fil **caractérisé en ce qu'**il comprend plusieurs stations d'émission et/ou de réception (1, 2, 3, 4) selon l'une des revendications 7 à 13.
